# EUROPÄISCHE PATENTSCHRIFT

(11) **EP 1 061 395 B1**
(45) Veröffentlichungstag und Bekanntmachung des Hinweises auf die Patenterteilung: **13.09.2006**
(21) Anmeldenummer: 00110744.0
(22) Anmeldetag: 19.05.2000
(51) Int. Cl.: G02B 7/02

(54) **Lösbare und spannungsfreie Halterung für optische Bauelemente**
Disconnectable and stressless mounting for optical parts
Montage détachable et sans tension pour des éléments optiques

(30) Priorität: 29.05.1999 DE 19924849
(43) Veröffentlichungstag der Anmeldung: 20.12.2000
(73) Patentinhaber: Leica Camera AG, 35606 Solms (DE)
(72) Erfinder: Schnabel, Rainer, 35789 Weilmünster (DE); Best, Stefan Uwe, 35606 Solms-Oberbiel (DE)
(74) Vertreter: Stamer, Harald

(56) Entgegenhaltungen:
- DE-A- 2 922 287
- DE-B- 1 113 101
- DE-U- 1 966 392
- US-A- 5 052 782

## Beschreibung

Die Erfindung betrifft eine lösbare und spannungsfreie Halterung eines in eine Fassung zentriert eingelegten optischen Bauelementes, wobei das optische Bauelement in dem zu haltenden Randbereich mit einer zur Fassung hin geneigten Fasenfläche versehen ist, die Fassung einen in axialer Richtung vor dem optischen Bauelement offenen Nuteinstich aufweist und zwischen Fasenfläche und Nuteinstich ein in axialer Richtung elastisch verformbares Ringelement eingedrückt ist.

Eine Halterung dieser Art ist aus DE 29 22 287 A1 bekannt. Eine in einen Fassungskörper zentriert eingelegte Linse wird durch einen in Umfangsnähe verlaufenden elastischen Ring unter elastischer Vorspannung gegen die axiale Anlage des Fassungskörpers gehalten. Der Ring besteht aus einem gummiartig elastischen Werkstoff und ist in eine Ringnut des Fassungskörpers eingedrückt. Die Ringnut ist in axialer Richtung teilweise von der Umfangsfläche der Linse überdeckt. Der Querschnitt der Ringnut soll mindestens so groß wie derjenige des Ringes sein, wobei das Einsetzen der Linse auch bei vorher eingelegtem Ring möglich sein soll. Als Form der Ringnut sind rechteckige, halbkreisförmige und trapezförmige Querschnitte angegeben, also Formen, die den Ring im wesentlich konvex umschließen.

Auch aus DE 1 113 101 PS ist eine solche Halterung bekannt, bei der die Ringnut genau dem Querschnitt des eingedrückten Ringes entspricht. Am Fassungskörper soll oberhalb der Ringnut eine nach innen weisende, schräggestellte umlaufende Fläche angeordnet sein, die in Form von bajonettartigen Lappen unterbrochen sein kann.

Obwohl diese Halterungen bereits seit Jahrzehnten bekannt sind, haben sie sich in der Praxis nicht durchgesetzt.

Eine hinsichtlich Teileaufwand und Teilebearbeitung vergleichbare Halterung besteht darin, das optische Bauelement durch einen in eine Nut in der Fassung eingreifenden Sprengring zu sichern. Der Sprengring besteht üblicherweise aus Metall und kann einen kreisförmigen oder rechteckigen Querschnitt aufweisen. Die Tiefe der Nut und die Einschnapptiefe des Sprengringes in radialer Richtung sind aufeinander abgestimmt. Die Höhe des Linsenrandes und die Einstichlage der angrenzenden Nut müssen ebenfalls sehr genau zueinander passen, um weder einen zu losen noch einen verspannten Linsensitz zu erzeugen. Toleranzen können nur durch aufwendige Nacharbeit ausgeglichen werden. Durch Temperaturschwankungen erzeugte Maßtoleranzen können nicht ausgeglichen werden. Eine Demontage des Sprengringes ohne Verkratzen der Linsenoberfläche ist nur bei äußerster Vorsicht möglich. Insbesondere bei mehrgliedrigen optischen Systemen ist eine nachträgliche Demontage aber notwendig, wenn nach dem Zusammenbau Schmutzpartikel im System festgestellt werden.

Aus DE 1 966 392 Gbm ist es bekannt, oberhalb der zentriert eingelegten Linse im Fassungskörper einen konisch geformten Nuteinstich vorzusehen, in den ein aus Kunststoff bestehender Sprengring eingesetzt wird, der eine entsprechend geformte konische Facette aufweist. Durch die konische Anlagefläche ergibt sich eine in axialer Richtung wirkende Andruckkraft, die einer Lockerung des Sprengringes entgegenwirkt und Fertigungstoleranzen im Nuteinstich ausgleicht. Da der Sprengring aus Kunststoff besteht, wird die Gefahr einer Verkratzung der Linsenoberfläche vermieden.

Auch diese Form der Halterung hat sich bisher nicht durchsetzen können.

Der Erfindung lag die Aufgabe zugrunde, die an sich bekannten Halterungen durch Optimierung der für einen sicheren Halt der optischen Bauelemente wesentlichen Einflußgrößen in der Weise weiterzubilden, daß sie insbesondere auch für Fassungen von Hochleistungsoptiken anwendbar werden.

Diese Aufgabe wird bei einer Halterung der eingangs genannten Art erfindungsgemäß dadurch gelöst, daß der Neigungswinkel der Fasenfläche zwischen 40° und 50° liegt, daß die im Bereich des optischen Bauelementes liegende Begrenzung des Nuteinstichs in Höhe der zur Fassung weisenden Fasenkante liegt und die vor dem optischen Bauelement liegende Begrenzung des Nuteinstichs unter einem Winkel von 10° bis 15° hinterschnitten ist, daß die Tiefe des Nuteinstichs um 0,15 bis 0,2 mm größer als der Radius des Ringelementes ist und die freie Öffnung zwischen der auf dem optischen Bauelement liegenden Fasenkante und der vorderen Kante der hinterschnittenen Begrenzung des Nuteinstichs gleich dem 0,8-fachen des Durchmessers des Ringelementes ist.

Für das Einfügen des Ringelementes ist es vorteilhaft, wenn die vordere Kante der hinterschnittenen Begrenzung des Nuteinstichs gerundet ist. Die Shore-Härte des Ringelementes sollte vorzugsweise etwa den Wert 70 aufweisen.

Als Ringelement kann auch eine radiale Ringfeder vorgesehen sein, deren Ringelemente durch die auf dem optischen Bauelement liegende Fasenkante eindellbar sind. Die Ringfeder kann auch so ausgebildet sein, daß ihre Federkraft durch geeignete Neigung der Ringelemente zwischen der Fasenfläche und der hinterschnittenen Begrenzung des Nuteinstichs wirkt.

Der Grundgedanke der Erfindung besteht darin, nur zwischen dem angefasten Linsenrand und dem Nuteinstich einen Hohlraum zu bilden, in den das elastisch verformbare Ringelement eingedrückt werden kann. Durch die angegebenen Abmessungen wird verhindert, daß das Ringelement aus dem Hohlraum herausspringen kann und zum anderen auch nicht vollständig aus der Halteposition über den Linsenrand hinaus in den Hohlraum gedrückt werden kann. Die Verformbarkeit in axialer Richtung ermöglicht einen Toleranzausgleich zwischen innerer Fasenkante und hinterschnittener Begrenzung des Nuteinstichs, sowie einen Ausgleich von Materialverformungen in axialer Richtung. Die auf der Linsenoberfläche liegende Fasenkante dellt das eingedrückte Ringelement ein und verhindert zusätzlich ein selbsttätiges Herausspringen des Ringelementes. Die Hinterschneidung der dieser Fasenkante gegenüberliegenden Begrenzung des Nuteinstichs dient zur weiteren Sicherung gegen selbsttätiges Herausspringen des eingedrückten Ringelementes.

Durch einen geschlossenen O-Ring als Ringelement kann zusätzlich eine Abdichtung der Fassung erreicht werden, wobei der O-Ring aufgrund der gewählten Shore-Härte einerseits elastisch genug ist und andererseits noch mit einem nadelförmigen Werkzeug eingestochen und herausgezogen werden kann. Eine Beschädigung der Linsenoberfläche ist dabei nahezu völlig ausgeschlossen.

Ringfedern sind bekannt und werden hinsichtlich Konstruktion und Eigenschaften in einem Katalog GDM3M, Blatt 9, der Fa. Bal Seal, beschrieben. Sie werden in Form radialer Ringfedern und als axiale Ringfedern angeboten. In der US-PS 5,052,782 ist die Verwendung einer axialen Ringfeder in Verbindung mit einem Vorschraubring zur spannungsfreien Halterung von Linsenelementen beschrieben. Bei axialen Ringfedern sind die Ringelemente gegeneinander geneigt, so daß sie sich unter dem Druck des Vorschraubringes unter Federspannung weiter neigen können. Bei der erfindungsgemäß vorgesehenen radialen Ringfeder werden die Ringelemente an der auf dem Linsenelement liegenden Fasenkante eingedellt und verklemmen sich außerdem in der gegenüberliegenden Hinterschneidung.

Ausführungsbeispiele der erfindungsgemäßen Halterung sind in der Zeichnung schematisch dargestellt und werden nachfolgend anhand der Figuren beschrieben. Dabei zeigen
- Fig. 1: eine Fassung mit eingelegten Linsen und ihre Halterung
- Fig. 2a + b: eine Detailansicht mit Rundschnur und
- Fig. 3: eine Detailansicht mit radialer Ringfeder.

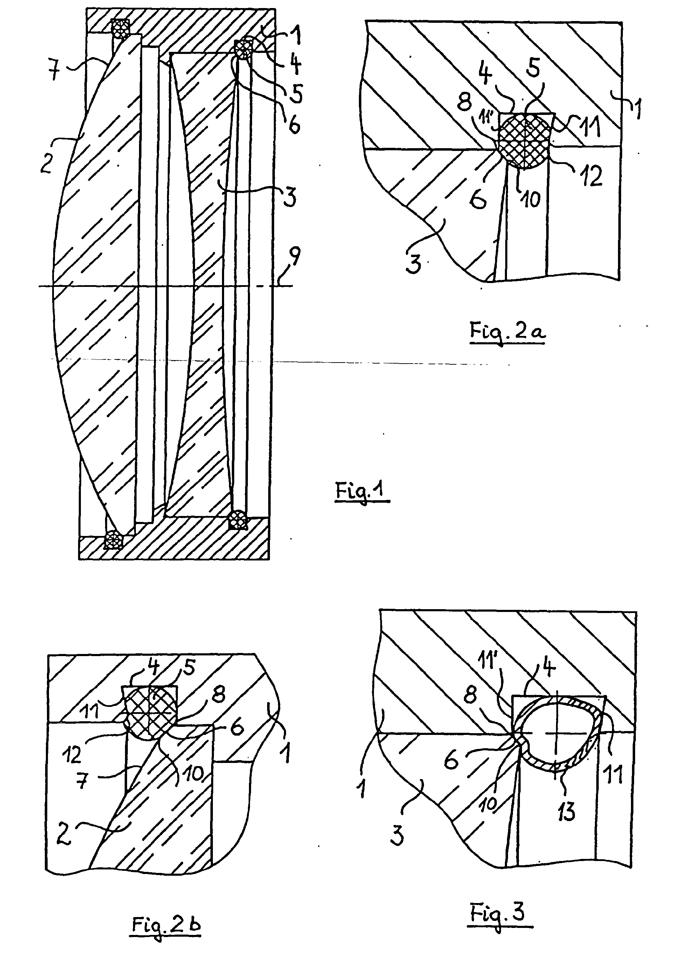

In die in Fig. 1 dargestellte Fassung 1 sind eine Linse 2 mit konvexer zu haltender Oberfläche und eine Linse 3 mit konkaver zu haltender Oberfläche dargestellt. Im Randbereich der Linsen 2, 3 sind in der Fassung 1 Nuteinstiche 4 vorgesehen, in die elastisch verformbare Ringelemente 5 eingedrückt sind. An die konkave Oberfläche der Linse 3 ist eine Fasenfläche 6 angeformt, um eine unter einem spitzen Winkel auf die Fassung 1 zulaufende Fläche zu schaffen. Der Neigungswinkel beträgt vorzugsweise 45°. Auch bei konvexen Linsen wird trotz der bereits bestehenden Neigung 7 zur Fassung hin eine besondere Fase mit entsprechendem spitzen Winkel angeformt.

Fig. 2a zeigt im Detail einen Querschnitt durch Fassung 1, konkave Linse 3, Nuteinstich 4 und Ringelement 5, das hier beispielsweise durch eine aus Gummi bestehende Rundschnur oder durch einen O-Ring gebildet wird. An den Rand der Linse 3 ist die Fasenfläche 6 angeformt. Diese weist eine an der Fassung liegende Fasenkante 8 und eine zur Linsenmitte 9 weisende, auf der Linsenoberfläche liegende Fasenkante 10 auf. Die Begrenzung 11'des Nuteinstichs 4 liegt an der Fasenkante 8 an. Der Nuteinstich 4 ist auf der der Fasenfläche 6 gegenüberliegenden Begrenzung 11 hinterschnitten. Der Hinterschneidungswinkel liegt zwischen 10° und 15°. Die vordere Kante 12 dieser Begrenzung 11 ist hier gerundet.

Der Abstand zwischen dem Boden des Nuteinstichs 4 und Fasenkante 10 ist erkennbar größer als der Querschnittsradius des Ringelementes 5, aber kleiner als der Querschnittsdurchmesser. Er ist vorzugsweise 0,15 mm größer als der Radius des Ringelementes 5. Ebenso ist die freie Öffnung zwischen der Fasenkante 10 und der gerundeten Nuteinstichkante 12 kleiner als der Querschnittsdurchmesser des Ringelementes 5. Sie soll möglichst gleich dem 0,8-fachen Durchmesser des Ringelementes 5 sein.

Beim Eindrücken in den durch die Fasenfläche 6 und Nuteinstich 4 gebildeten Hohlraum verformt sich das Ringelement 5 elastisch, und zwar wird es in axialer Richtung gestaucht und in radialer Richtung gestreckt. Der größere Teil der Querschnittsfläche des Ringelementes 5 liegt innerhalb dieses Hohlraumes und hält die Linse 3 fest. Geringe Toleranzen zwischen der Fasenkante 8 und der Lage des Nuteinstichs 4 werden durch das elastisch verformbare Ringelement 5 ausgeglichen. Ebenso können Materialveränderungen in axialer Richtung durch das Ringelement 5 aufgefangen werden. Zusätzlich stellt das Ringelement 5 eine Stoß- und Vibrationssicherung dar. Die Elastizität des Materials für das Ringelement 5 kann den jeweils geforderten Bedürfnissen für festen Halt und elastischen Ausgleich angeglichen werden. Sie entspricht vorzugsweise der Shore-Härte 70.

Fig. 2b zeigt einen entsprechenden Detailausschnitt bei einer konvexen Linse.

Bei der in Fig. 3 dargestellten Detailansicht mit einer radialen Ringfeder ist erkennbar, wie das dargestellte Ringelement 13 an der Fasenkante 10 eingedellt und in Richtung des hinterschnittenen Nuteinstichs 4 verformt wird. Dadurch wird die Ringfeder ebenfalls mit dem größeren Teil ihrer Querschnittsfläche in dem Hohlraum zwischen Fasenfläche 6 und hinterschnittenem Nuteinstich 4 sicher gehalten.

Da die Ringelemente 13 der Ringfeder weniger leicht verformbar sind als z.B. eine gummielastische Rundschnur, ist hier auf eine sorgfältige Abstimmung des Außendurchmessers der Ringelemente 13 im Verhältnis zu dem offenen Abstand zwischen Fasenkante 10 und vorderer Nuteinstichkante zu achten. Durch eine Neigung der Ringelemente 13 beim Eindrücken können Toleranzen ausgeglichen und eine resultierende Federkraft in Richtung auf die Fasenfläche 6 erzeugt werden.

## Patentansprüche

1. Lösbare und spannungsfreie Halterung eines in eine Fassung (1) zentriert eingelegten optischen Bauelementes (2, 3), wobei das optische Bauelement (2, 3) in dem zu haltenden Randbereich mit einer zur Fassung (1) hin geneigten Fasenfläche (6) versehen ist, die Fassung (1) einen in axialer Richtung vor dem optischen Bauelement (2, 3) offenen Nuteinstich (4) aufweist und zwischen Fasenfläche (6) und Nuteinstich (4) ein in axialer Richtung elastisch verformbares Ringelement (5) eingedrückt ist, **dadurch gekennzeichnet, daß** der Neigungswinkel der Fasenfläche (6) zwischen 40° und 50° liegt, daß die im Bereich des optischen Bauelementes (2, 3) liegende Begrenzung (11') des Nuteinstichs (4) in Höhe der zur Fassung (1) weisenden Fasenkante (8) liegt und die vor dem optischen Bauelement (2, 3) liegende Begrenzung (11) des Nuteinstichs (4) unter einem Winkel von 10° bis 15° hinterschnitten ist, daß die Tiefe des Nuteinstichs (4) um 0,15 bis 0,2 mm größer als der Radius des Ringelementes (5) ist und die freie Öffnung zwischen der auf dem optischen Bauelement (2, 3) liegenden Fasenkante (10) und der vorderen Kante (12) der hinterschnittenen Begrenzung (11) des Nuteinstichs (4) gleich dem 0,8-fachen des Durchmessers des Ringelementes (5) ist.

2. Halterung nach Anspruch 1, **dadurch gekennzeichnet, daß** die vordere Kante (12) der hinterschnittenen Begrenzung (11) des Nuteinstichs (4) gerundet ist.

3. Halterung nach Anspruch 1, **dadurch gekennzeichnet, daß** die Shore-Härte des Ringeelementes (5) etwa den Wert 70 aufweist.

4. Halterung nach Anspruch 1, **dadurch gekennzeichnet, daß** als Ringelement (5) eine radiale Ringfeder vorgesehen ist, deren Ringelemente (13) durch die auf dem optischen Bauelement (2, 3) liegende Fasenkante (10) eindellbar sind.

5. Halterung nach Anspruch 1, **dadurch gekennzeichnet, daß** als Ringelement (5) eine radiale Ringfeder vorgesehen ist, deren Federkraft durch geeignete Neigung der Ringelemente (13) zwischen der Fasenfläche (6) und der hinterschnittenen Begrenzung (11) des Nuteinstichs (4) wirkt.

## Claims

1. Releasable and stress-free securing means for an optical element (2, 3) positioned in a centred manner in a mount (1), it being the case that the optical element (2, 3) is provided, in the border region which is to be retained, with a bevelled surface (6) inclined in the direction of the mount (1), the mount (1) has a groove (4) which is open axially in front of the optical element (2, 3), and a ring element (5) which is elastically deformable in the axial direction is pressed in between the bevelled surface (6) and groove (4), **characterized in that** the angle of inclination of the bevelled surface (6) is between 40° and 50°, **in that** the boundary (11') of the groove (4), said boundary being located in the region of the optical element (2, 3), is level with the bevel edge (8), which is oriented towards the mount (1), and the boundary (11) of the groove (4), said boundary being located in front of the optical element (2, 3), is undercut at an angle of from 10° to 15°, **in that** the depth of the groove (4) is greater than the radius of the ring element (5) by from 0.15 to 0.2 mm, and the free opening between the bevel edge (10), which is located on the optical element (2, 3), and the front edge (12) of the undercut boundary (11) of the groove (4) is equal to 0.8 of the diameter of the ring element (5).

2. Securing means according to Claim 1, **characterized in that** the front edge (12) of the undercut boundary (11) of the groove (4) is rounded.

3. Securing means according to Claim 1, **characterized in that** the Shore hardness of the ring element (5) is approximately 70.

4. Securing means according to Claim 1, **characterized in that** the ring element (5) provided is a radial annular spring, of which the ring elements (13) can be indented by the bevel edge (10), which is located on the optical element (2, 3).

5. Securing means according to Claim 1, **characterized in that** the ring element (5) provided is a radial annular spring, of which the spring force, by suitable inclination of the ring elements (13), acts between the bevelled surface (6) and the undercut boundary (11) of the groove (4).

## Revendications

1. Montage détachable et sans tension pour un élément optique (2, 3) inséré de manière centrée dans une monture (1), l'élément optique (2, 3) étant pourvu, dans la zone du bord à maintenir, d'une surface biseautée (6) inclinée vers la monture (1), la monture (1) présentant une encoche en forme de rainure (4) ouverte dans la direction axiale avant l'élément optique (2, 3), et un élément annulaire (5) déformable élastiquement dans la direction axiale étant enfoncé entre la surface biseautée (6) et l'encoche en forme de rainure (4), **caractérisé en ce que** l'angle d'inclinaison de la surface biseautée (6) est compris entre 40° et 50°, **en ce que** la délimitation (11') de l'encoche en forme de rainure (4) située dans la région de l'élément optique (2, 3) se trouve à la hauteur de l'arête biseautée (8) tournée vers la monture (1) et la délimitation (11) de l'encoche en forme de rainure (4) située avant l'élément optique (2, 3) est pourvue d'une contre-dépouille à un angle de 10° à 15°, **en ce que** la profondeur de l'encoche en forme de rainure (4) est supérieure de 0,15 à 0,2 mm au rayon de l'élément annulaire (5) et l'ouverture libre entre l'arête biseautée (10) située sur l'élément optique (2, 3) et l'arête avant (12) de la délimitation en contre-dépouille (11) de l'encoche en forme de rainure (4) est égale à 0,8 fois le diamètre de l'élément annulaire (5).

2. Montage selon la revendication 1, **caractérisé en ce que** l'arête avant (12) de la délimitation en contre-dépouille (11) de l'encoche en forme de rainure (4) est arrondie.

3. Montage selon la revendication 1, **caractérisé en ce que** la dureté Shore de l'élément annulaire (5) présente approximativement la valeur 70.

4. Montage selon la revendication 1, **caractérisé en ce que** l'on prévoit comme élément annulaire (5) un ressort annulaire radial dont les éléments annulaires (13) peuvent être enfoncés par l'arête biseautée (10) située sur l'élément optique (2, 3).

5. Montage selon la revendication 1, **caractérisé en ce que** l'on prévoit comme élément annulaire (5) un ressort annulaire radial dont la force de ressort agit par l'inclinaison appropriée des éléments annulaires (13) entre la surface biseautée (6) et la délimitation en contre-dépouille (11) de l'encoche en forme de rainure (4).
